# EUROPEAN PATENT APPLICATION

(11) **EP 2 380 648 A1**
(43) Date of publication of application: **26.10.2011**
(21) Application number: 10193779.5
(22) Date of filing: 06.12.2010
(51) Int. Cl.: B01D 46/24, F01N 3/022

(54) **Honeycomb structured body**

(30) Priority: 22.04.2010 WO PCT/JP2010/057181
(71) Applicant: Ibiden Co., Ltd., Ogaki-shi Gifu 503-8604 (JP)
(72) Inventor: Tamura, Seiji, Gifu 501-0695 (JP); Sato, Masaya, Gifu 501-0695 (JP); Goto, Shigeaki, Gifu 501-0695 (JP)
(74) Representative: HOFFMANN EITLE

(57) **Abstract**

An object of the present invention is to provide a honeycomb structured body that can be preferably used as a large honeycomb structured body, and the honeycomb structured body of the present invention is a honeycomb structured body including: a ceramic block formed by a plurality of honeycomb fired bodies combined with one another with an adhesive layer interposed therebetween, each of the honeycomb fired bodies having a large number of cells placed in parallel with one another in a longitudinal direction with a cell wall therebetween; and a sealing material layer formed on a peripheral face of the ceramic block,
wherein the honeycomb fired bodies comprise a first-shaped unit and a second-shaped unit,
the first-shaped unit has a quadrangular shape in the cross-section perpendicular to the longitudinal direction,
the second-shaped unit has a shape that includes at least a first side, a second side making a right angle with the first side, and an inclined side facing the right angle in the cross section perpendicular to the longitudinal direction,
an outer wall is formed in a peripheral portion of the second-shaped unit,
the second-shaped unit is located in a peripheral portion of the ceramic block and is disposed with the second side being adjacent to the first-shaped unit,
the honeycomb structured body has, in the cross-section perpendicular to the longitudinal direction, a shape in which the second side forming the periphery of the second-shaped unit is longer than the longest side of the four sides forming the periphery of the first-shaped unit in the cross section perpendicular to the longitudinal direction.

## Description

### TECHNICAL FIELD

The present invention relates to a honeycomb structured body.

### BACKGROUND ART

In recent years, particulate matters (hereinafter, also referred to as PMs) such as soot in exhaust gases that are discharged from internal combustion engines for vehicles such as a bus and a truck, construction equipment and the like, have raised problems as contaminants harmful to the environment and the human body. In order to solve those problems, there have been proposed various particulate filters in which a honeycomb structured body made of porous ceramics is used as a filter capable of capturing PMs in exhaust gases to purify the exhaust gases.

As the honeycomb structured body of this kind, for example, there is known a honeycomb structured body including a plurality of pillar-shaped honeycomb fired bodies combined with one another with an adhesive layer interposed therebetween. Here, the honeycomb fired bodies are each manufactured by carrying out extrusion-molding, degreasing, firing or the like on a mixture comprising a ceramic raw material such as silicon carbide.

Patent Document 1 discloses a method for manufacturing a honeycomb structured body.
According to the manufacturing of the honeycomb structured body in Patent Document 1, a rectangular pillar-shaped ceramic block (honeycomb segment joined body) is prepared by combining a plurality of rectangular pillar-shaped honeycomb fired bodies (honeycomb segments) with one another with an adhesive layer interposed therebetween. Then, grinding is carried out in which the periphery of the ceramic block is ground to prepare a ceramic block. Then, the peripheral face of this ceramic block is coated with a sealing material (coating material) to manufacture a honeycomb structured body.

Patent Document 1: JP-A 2008-179526

### SUMMARY OF THE INVENTION PROBLEMS TO BE SOLVED BY THE INVENTION

In recent years, a honeycomb structured body is installed as a large particulate filter for purifying exhaust gases that are discharged from big cars such as a diesel truck, agricultural machines, construction machines, ships, and locomotives.
As mentioned above, manufacturing of a honeycomb structured body involves grinding the periphery of a ceramic block into a specific shape. In the case of manufacturing of a large filter, a ceramic part to be ground in grinding is in a large amount, and therefore, a lot of raw materials are wasted. Further, since ceramics such as silicon carbide has a high hardness, grinding for it requires a long time.

In light of this, it has been desired to provide a honeycomb structured body that can solve the above-mentioned problems attributed to the grinding and can be preferably used as a large honeycomb structured body.

### MEANS FOR SOLVING THE PROBLEMS

A honeycomb structured body according to claim 1 includes: a ceramic block formed by a plurality of honeycomb fired bodies combined with one another with an adhesive layer interposed therebetween, each of the honeycomb fired bodies having a large number of cells placed in parallel with one another in a longitudinal direction with a cell wall therebetween; and
a sealing material layer formed on a peripheral face of the ceramic block,
wherein
the honeycomb fired bodies comprise a first-shaped unit and a second-shaped unit,
the first-shaped unit has a quadrangular shape in the cross-section perpendicular to the longitudinal direction,
the second-shaped unit has a shape that includes at least a first side, a second side making a right angle with the first side, and an inclined side facing the right angle in the cross section perpendicular to the longitudinal direction,
an outer wall is formed in a peripheral portion of the second-shaped unit,
the second-shaped unit is located in a peripheral portion of the ceramic block and is disposed with the second side being adjacent to the first-shaped unit,
the honeycomb structured body has, in the cross-section perpendicular to the longitudinal direction, a shape in which the second side forming the periphery of the second-shaped unit is longer than the longest side of the four sides forming the periphery of the first-shaped unit in the cross section perpendicular to the longitudinal direction.

The second-shaped unit has a first side and a second side. The first and second sides form a right angle. The side that is adjacent to the first-shaped unit is the second side.
Further, the second side is longer than the longest side of the four sides that form the periphery of the first-shaped unit in the cross section perpendicular to the longitudinal direction.

The second-shaped unit has an inclined side that forms the periphery thereof.
The inclined side is a side facing the right angle made by the first and second sides, and is the longest side.
The inclined side may be a side formed by a circular arc or a side formed by a straight line.
When the inclined side is a side formed by a circular arc, a ceramic block with a shape similar to a round pillar shape and the like can be manufactured by disposing the second-shaped unit so that the side formed by a circular arc is located on the outermost peripheral side.
When the inclined side is a side formed by a straight line, the inclined line has a tilt close to that of a side equivalent to the hypotenuse of a right triangle that includes a right angle made by the first and second sides. Also by disposing the second-shaped unit so that the inclined side formed by a straight line is located on the outermost peripheral side, a ceramic block with a shape similar to a round pillar shape and the like can be manufactured.
Further, by forming a sealing material layer on the peripheral face of the ceramic block, the shape can be changed into a round pillar shape and the like.

Specifically, the honeycomb structured body including the second-shaped unit and the first-shaped unit is suitable for being manufactured without grinding. In the manufacturing, no raw materials are wasted and no time for grinding is required. That is, the honeycomb structured body according to claim 1 can solve the problems attributed to the grinding.

In the honeycomb structured body according to claim 2, the second side forming the periphery of the second-shaped unit is 1.5 to 2.5 times longer than the longest side of the four sides forming the periphery of the first-shaped unit in the cross section perpendicular to the longitudinal direction.

When the cross-sectional shape of the second-shaped unit is thus-specified, a ceramic block with a shape similar to a round pillar shape and the like can be manufactured.

In the honeycomb structured body according to claim 3, the honeycomb fired bodies further include a third-shaped unit, the third-shaped unit has a substantially triangular shape in the cross-section perpendicular to the longitudinal direction, and the third-shaped unit is located in the peripheral portion of the ceramic block.

When the third-shaped unit is disposed, a ceramic block with a shape more similar to a round pillar shape and the like can be manufactured.

In the honeycomb structured body according to claim 4, the number of the honeycomb fired bodies is 25 or more.

In the honeycomb structured body according to claim 5, the honeycomb structured body has a circular shape in the cross-section perpendicular to the longitudinal direction and has a diameter of 190 mm or more.

In the honeycomb structured body according to claim 6, the large number of cells have a quadrangular shape in the cross-section perpendicular to the longitudinal direction.

In the honeycomb structured body according to claim 7, the large number of cells include a large-capacity cell and a small-capacity cell.

In the honeycomb structured body according to claim 8, the large-capacity cell and the small-capacity cell have, in the cross-section perpendicular to the longitudinal direction, a quadrangular shape or a quadrangular shape in which at least one portion equivalent to a corner of the quadrangle has a circular-arc shape.

In the honeycomb structured body according to claim 9, the large-capacity cell has an octagonal shape in the cross-section perpendicular to the longitudinal direction, and the small-capacity cell has, in the cross-section perpendicular to the longitudinal direction, a quadrangular shape or a quadrangular shape in which at least one portion equivalent to a corner of the quadrangle has a circular-arc shape.

In the honeycomb structured body according to claim 10, said large-capacity cell and said small-capacity cell have a cross-section perpendicular to the longitudinal direction in which each side of the cells is formed by a curved line.

In the honeycomb structured body according to claim 11, the large number of cells are sealed at either one end thereof.

In the honeycomb structured body according to claim 12, the honeycomb structured body has a shape of a circle, a racetrack, an ellipse, or a substantially triangle in the cross-section perpendicular to the longitudinal direction.

In the honeycomb structured body according to claim 13, the ceramic block has a shape of a circle, a racetrack, an ellipse, or a polygon similar to a substantially triangle in the cross-section perpendicular to the longitudinal direction.

In the present description, "round pillar shape and the like" includes, for example, a round pillar shape, a pillar shape with a racetrack end face, a cylindroid shape, or substantially triangular pillar shape, and all these shapes are collectively expressed as a "round pillar shape and the like".
The present invention relates to a honeycomb structured body including a ceramic block with a shape similar to the respective shapes mentioned above.

### BRIEF DESCRIPTION OF THE DRAWINGS

Fig. 1 is a perspective view schematically illustrating one example of a honeycomb structured body of a first embodiment of the present invention.
Fig. 2(a) is a perspective view schematically illustrating one example of a first-shape unit, which is one of the honeycomb fired bodies that configure the honeycomb structured body of the first embodiment of the present invention.
Fig. 2(b) is a cross sectional view taken along line A-A in Fig. 2(a).
Fig. 3 is a perspective view schematically illustrating one example of a second-shaped unit, which is one of the honeycomb fired bodies that configure the honeycomb structured body of the first embodiment of the present invention.
Fig. 4 is a perspective view schematically illustrating one example of a third-shaped unit, which is one of the honeycomb fired bodies that configure the honeycomb structured body of the first embodiment of the present invention.
Fig. 5 is a side view of the honeycomb structured body illustrated in Fig. 1.
Fig. 6 is a side view schematically illustrating one example of a honeycomb structured body of a second embodiment of the present invention.
Fig. 7 is a side view schematically illustrating one example of a honeycomb structured body of a third embodiment of the present invention.
Fig. 8(a), Fig. (b), Fig. 8(c), Fig. 8(d), and Fig. 8(e) are side views each schematically illustrating one example of the second-shaped unit according to the honeycomb structured body of the present invention.
Fig. 9(a), Fig. 9(b), Fig. 9(c), Fig. 9(d), and Fig. 9(e) are side views each schematically illustrating one example of an end face of the first-shaped unit according to the honeycomb structured body of the present invention.
Fig. 10(a), Fig. 10(b), Fig. 10(c), Fig. 10(d), and Fig. 10(e) are side views each schematically illustrating one example of an end face of the second-shaped unit according to the honeycomb structured body of the present invention.
Fig. 11(a), Fig. 11(b), Fig. 11(c), Fig. 11(d), and Fig. 11(e) are side views each schematically illustrating one example of an end face of the third-shaped unit according to the honeycomb structured body of the present invention.
Fig. 12 is a side view schematically illustrating one example of the honeycomb structured body according to an embodiment of the present invention.

### MODE FOR CARRYING OUT THE INVENTION

The present inventors manufactured, as the honeycomb fired bodies, units each of which has a shape that includes at least a first side, a second side, and an inclined side in the cross section perpendicular to the longitudinal direction (hereinafter, a honeycomb fired body with such a shape is referred to as a second-shaped unit, also as a unit with a fan-like cross section or a unit with a trapezoidal cross section).
The present inventors also manufactured units each of which has a quadrangular shape in the cross section perpendicular to the longitudinal direction (hereinafter, a honeycomb fired body with such a shape is referred to as a first-shaped unit, also as a unit with a quadrangular cross section) .
Upon manufacturing a ceramic block using the units with a quadrangular cross section in combination with the units with a fan-like cross section and/or the units with a trapezoidal cross section, the units with a fan-like cross section and/or the units with a trapezoidal cross section were disposed so as to be located in the peripheral portion of the ceramic block, thereby manufacturing a ceramic block with a shape similar to a round pillar shape and the like.
Here, in the present description, "unit located in the peripheral portion of the ceramic block" means a unit (honeycomb fired body) that constitutes part of the peripheral face of the ceramic block.

Further, the inventors have found that the honeycomb structured body can be manufactured without grinding when a sealing material layer is formed on the peripheral face of this ceramic block so that the honeycomb structured body can be formed into a round pillar shape and the like.

The inventors have also found that a ceramic block with a shape similar to a round pillar shape and the like can be preferably manufactured when the cross section of the unit with a fan-like cross section and/or the unit with a trapezoidal unit has such a shape that the second side that forms the periphery of the unit with a fan-like cross section and/or the unit with a trapezoidal unit is longer than the longest side of the four sides that form the periphery of the unit with a quadrangular cross section in the cross section perpendicular to the longitudinal direction. Thus, the present inventors have completed the present invention.
Here, in the present description, the second-shaped unit whose inclined side is a circular arc is referred to as a unit with a fan-like cross section; whereas the second-shaped unit whose inclined side is a straight line is referred to as a unit with a trapezoidal cross section.

The cross section of the honeycomb structured body perpendicular to the longitudinal direction does not necessarily have a circular shape, and may have a shape of a racetrack, an ellipse, or a substantially triangle and the like. The cross section of the ceramic block also can be formed into a shape of a racetrack, an ellipse, or a shape similar to a substantially triangle and the like by using the above-mentioned units in combination.
In addition, when the cross section of the ceramic block has a shape of a racetrack, an ellipse, or a shape similar to a substantially triangle and the like, it means that the cross-sectional shape is approximate to each shape although having a projective portion or a recessed portion partly formed from the periphery.
Further, the almost triangular cross-sectional shape means such a shape that apexes of the triangle have a curved shape.

### (First Embodiment)

The following description will discuss a first embodiment, which is one embodiment of the present invention, with reference to drawings.

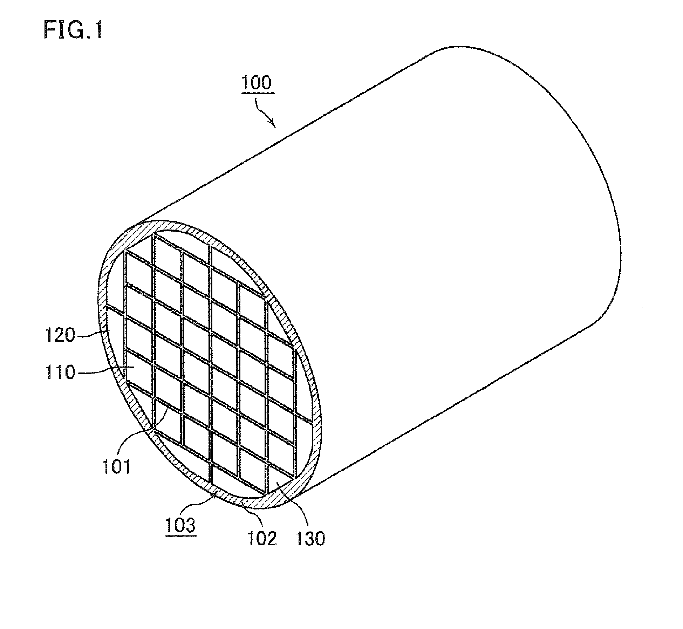

Fig. 1 is a perspective view schematically illustrating one example of a honeycomb structured body of a first embodiment of the present invention.

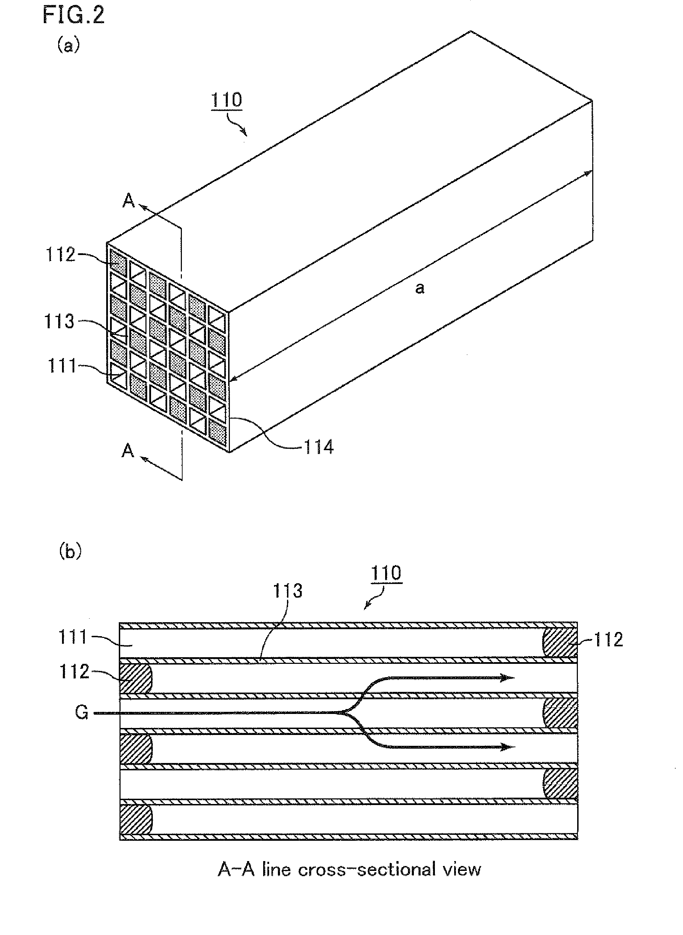

Fig. 2(a) is a perspective view schematically illustrating one example of the first-shaped unit, which is one of the honeycomb fired bodies that configure the honeycomb structured body of the first embodiment of the present invention.
Fig. 2(b) is a cross-sectional view taken along line A-A in Fig. 2(a).

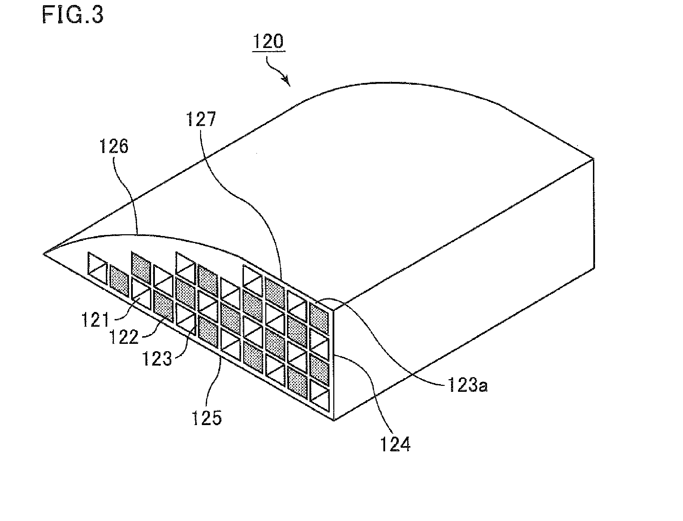

Fig. 3 is a perspective view schematically illustrating one example of the second-shaped unit, which is one of the honeycomb fired bodies that configure the honeycomb structured body of the first embodiment of the present invention.

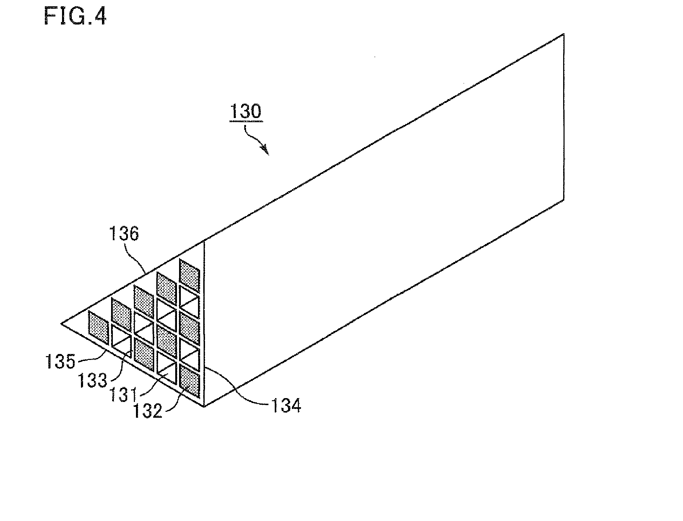

Fig. 4 is a perspective view schematically illustrating one example of the third-shaped unit, which is one of the honeycomb fired bodies that configure the honeycomb structured body of the first embodiment of the present invention.

In a honeycomb structured body 100 illustrated in Fig. 1, a plurality of porous silicon carbide honeycomb fired bodies 110 (first-shaped units 110) with a shape illustrated in Fig. 2(a) and Fig. 2(b), a plurality of porous silicon carbide honeycomb fired bodies 120 (second-shaped units 120) with a shape illustrated in Fig. 3, and a plurality of porous silicon carbide honeycomb fired bodies 130 (third-shaped units 130) with a shape illustrated in Fig. 4 are combined with one another with a sealing material layer (adhesive layer) 101 interposed therebetween to configure a ceramic block 103. Further, a sealing material layer (coat layer) 102 is formed on the periphery of this ceramic block 103.

In the first-shaped unit 110 illustrated in Fig. 2 (a) and Fig. 2 (b) , a large number of cells 111 are disposed in parallel with one another in a longitudinal direction (the direction shown by a double-headed arrow "a" in Fig. 2(a)) with a cell wall 113 interposed therebetween. The cells 111 are sealed with a plug 112 at either one end thereof, and therefore, an exhaust gas G that flows into one cell 111 whose end on one side is open never fails to pass through the cell wall 113 that separates the cells 111, and then is discharged from another cell 111 whose end on the other side is open.
Thus, the cell wall 113 functions as a filter for capturing PMs and the like.
The cross section of the first-shaped unit 110 perpendicular to the longitudinal direction has a quadrangular shape, and the first-shaped unit 110 is a unit with a quadrangular cross section.
Four sides 114 that form the periphery of the above-mentioned quadrangle have almost the same length, and the first-shaped unit 110 has a substantially square shape in the cross section perpendicular to the longitudinal direction.

Also in the second-shaped unit 120 illustrated in Fig. 3, a large number of cells 121, plugs 122, and cell walls 123 are provided as in the first-shaped unit 110. Accordingly, the second-shaped unit 120 functions as a filter for capturing PMs and the like.
Further, an outer wall 123a that is constituted by the cell wall is provided in the peripheral portion of the second-shaped unit 120.
The cross section of the second-shaped unit 120 perpendicular to the longitudinal direction has a first side 124, a second side 125, a third side 127, and an inclined side 126.
The first side 124 and the second side 125 make a right angle with each other, and the inclined side 126 faces the right angle. The inclined side 126 is a circular arc.
Here, in the present description, the "facing the right angle" means that the inclined side is a side other than the two sides that make the right angle.
The third side 127 is a side that connects the inclined side 126 to the first side 124, and is parallel to the second side 125.
Specifically, the second-shaped unit 120 is a unit with a fan-like cross section composed of one circular arc and three straight line portions.

Also in the third-shaped unit 130 illustrated in Fig. 4, a plurality of cells 131, plugs 132, and cell walls 133 are provided as in the first-shaped unit 110. Thus, the third-shaped unit 130 functions as a filter for capturing PMs and the like.
The cross section of the third-shaped unit 130 perpendicular to the longitudinal direction has a triangular shape, so that the third-shaped unit 130 is a unit with a triangular cross section.
Further, the cross section of the third-shaped unit 130 perpendicular to the longitudinal direction has an isosceles right triangular shape that includes a right angle made by a first side 134 and a second side 135, and a hypotenuse 136 facing the right angle.

Here, in the present description, the shape of the respective units and the shape of the cells are expressed as triangle, quadrangle, and the like, but those in the present description are not required to be a strict triangle, quadrangle, and the like formed only by completely straight lines, and may be shapes whose corner(s) (apex(es)) is chamfered with a straight or curved line and which can be almost identified with a triangle, quadrangle, and the like. Further, in the present description, the terms "right angle", "parallel", "isosceles right triangle", and the like do not mean mathematically strict shapes, and include shapes that can be almost identified with shapes of "right angle", "parallel", "isosceles right angle", and the like.

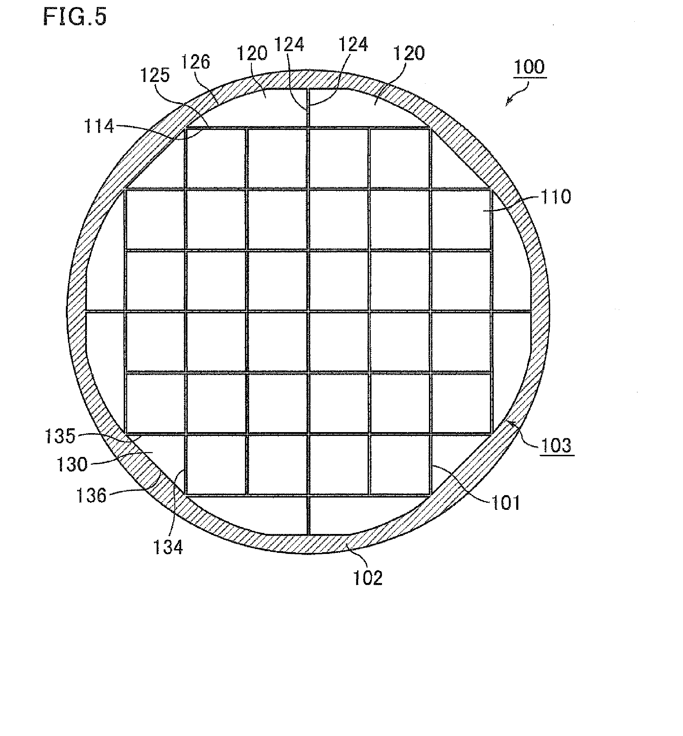

Fig. 5 is a side view of the honeycomb structured body illustrated in Fig. 1.
The following description will discuss an arrangement of the first-shaped units 110, the second-shaped units 120, and the third-shaped units 130 in the honeycomb structured body 100, with reference to Fig. 5.
The honeycomb structured body 100 includes the first-shaped units 110 (the units with a quadrangular cross section) disposed in the center of its cross section. The number of the first-shaped units 110 is 32 pieces.

Eight pieces of the second-shaped units 120 (units with a fan-like cross section) are disposed around the first-shaped units 110. The second-shaped units 120 are each disposed so that the second side 125 is adjacent to the first-shaped unit 110 and that the inclined side 126 forms the peripheral face of the ceramic block. Further, two of the second-shaped units 120 are disposed so that the first sides 124 of the respective second-shaped units 120 are adjacent to each other.
The second side 125 of the second-shaped unit 120 is longer than the side 114 that forms the periphery of the first-shaped unit 110.
Particularly it is desirable that the second side 125 of the second-shaped unit 120 is 1.5 to 2.5 times longer than the side 114 that forms the periphery of the first-shaped unit 110.

Four pieces of the third-shaped units 130 (units with a triangular cross section) are each disposed in a portion free of the second-shaped unit 120 in the periphery of the first-shaped units 110.
The third-shaped units 130 are each disposed so that the first side 134 and the second side 135 thereof are adjacent to the first-shaped units 110, respectively, and that the hypotenuse 136 forms the peripheral face of the ceramic block.

In the honeycomb structured body 100, the total number of the honeycomb fired bodies is 44 pieces. Of the total, 32 pieces are the first-shaped units, 8 pieces are the second-shaped units, and 4 pieces are the third-shaped units.
Forty-four pieces of the honeycomb fired bodies are combined with one another with an adhesive layer 101 interposed therebetween to configure a ceramic block 103.
In addition, a sealing material layer 102 is formed on the peripheral face of the ceramic block 103, and thus, the cross section of the honeycomb structured body 100 perpendicular to the longitudinal direction has a circular shape.
Further, this honeycomb structured body with a circular cross section has a diameter of 190 mm or more.
Here, when the cross section of the honeycomb structured body perpendicular to the longitudinal direction has a racetrack, elliptical, or substantially triangular shape, it is desirable that the longest line segment of line segments each of which passes through the center of each shape and joints two points on the periphery has a length of 190 mm or more.

Next, the following description will discuss a method for manufacturing the honeycomb structured body of the present embodiment.
The method for manufacturing the honeycomb structured body of the present embodiment is a method for manufacturing a honeycomb structured body, including: molding a ceramic raw material to prepare honeycomb molded bodies each including a large number of cells placed in parallel with one another in a longitudinal direction with a cell wall interposed therebetween; firing the honeycomb molded bodies to prepare honeycomb fired bodies; combining a plurality of the honeycomb fired bodies with one another with an adhesive layer interposed therebetween to prepare a ceramic block; and forming a sealing material layer on the peripheral face of the ceramic block, wherein in the molding and firing, at least a first-shaped unit and a second-shaped unit are prepared,
the first-shaped unit has a quadrangular shape in the cross-section perpendicular to the longitudinal direction,
the second-shaped unit has a shape that includes at least a first side, a second side making a right angle with the first side, and an inclined side facing the right angle in the cross section perpendicular to the longitudinal direction,
an outer wall is formed in a peripheral portion of the second-shaped unit,
the second side forming the periphery of the second-shaped unit is longer than the longest side of the four sides forming the periphery of the first-shaped unit in the cross section perpendicular to the longitudinal direction, and
in the combining, the second-shaped unit is disposed so that the second side is adjacent to the first-shaped unit and that the inclined side forms the outermost periphery of the ceramic block.

Further, according to the method for manufacturing the honeycomb structured body of the present embodiment, in the molding and firing, the second-shaped unit is prepared so that the second side forming the periphery of the second-shaped unit is 1.5 to 2.5 times longer than the longest side of the four sides forming the periphery of the first-shaped unit in the cross section perpendicular to the longitudinal direction.

Moreover, according to the method for manufacturing the honeycomb structured body of the present embodiment, in the molding and firing, a third-shaped unit having a substantially triangular shape in the cross-section perpendicular to the longitudinal direction is also prepared, and the third-shaped unit is disposed in the peripheral portion of the ceramic block.

The following description will discuss the method for manufacturing the honeycomb structured body of the present embodiment in the order of the process.
Firstly, silicon carbide powders having different average particle diameters as a ceramic raw material are mixed with an organic binder, a liquid-state plasticizer, a lubricant, water, and the like to prepare a wet mixture for manufacturing molded bodies.

Successively, molding is carried out in which the wet mixture is extrusion-molded with an extrusion molding apparatus to prepare honeycomb molded bodies with a specific shape.
In this case, the shape of the die is changed, thereby preparing predetermined numbers of honeycomb molded bodies with a first shape that are to be the first-shaped units, honeycomb molded bodies with a second shape that are to be the second-shaped units, and honeycomb molded bodies with a third shape that are to be the third-shaped units.
In the following processes, the term "honeycomb molded bodies" is intended to refer to these three kinds of honeycomb molded bodies without distinguishing the three.

Next, cutting is carried out in which both ends of the honeycomb molded bodies are cut into a predetermined length with a cutting apparatus, and the cut honeycomb molded bodies are dried with a drying apparatus.
Successively, a plug material paste that is to be a plug in a specific amount is filled into the cells at either one end thereof to seal the cells. Through these processes, honeycomb molded bodies with the sealed cells are manufactured.
Here, the above-mentioned wet mixture can be used as the plug material paste.

Next, degreasing is carried out in which organic matters of the honeycomb molded bodies with the sealed cells are heated in a degreasing furnace. Thus, honeycomb degreased bodies are manufactured. These honeycomb degreased bodies have a shape almost the same as that of the respective honeycomb fired bodies illustrated in Fig. 2(a), Fig. 3, and Fig. 4.

Then, the honeycomb degreased bodies are transported into a firing furnace, and then fired at 2000 to 2300°C under argon atmosphere to manufacture honeycomb fired bodies having shapes illustrated in Fig. 2 (a) , Fig. 3, and Fig. 4, i.e. first-shaped units, second-shaped units, and third-shaped units.
In the following processes, the term honeycomb fired bodies" is intended to refer to these three kinds of honeycomb molded bodies without distinguishing the three.

Subsequently, combining is carried out in which an adhesive paste layer is formed between the honeycomb fired bodies, and then heated and solidified to form an adhesive layer, and thus the honeycomb fired bodies are combined with one another by interposing the adhesive layer therebetween to manufacture a ceramic block.
An adhesive paste containing inorganic fibers and/or a whisker, an inorganic particle, an inorganic binder, and an organic binder is suitably used as the adhesive paste.

In this combining, the first-shaped units are disposed in the center portion, and around them, the second-shaped units and the third-shaped units are disposed, and thus a ceramic block with a cross-sectional shape illustrated in Fig. 5 is manufactured.
Particularly, the second-shaped units are each disposed so that the second side thereof is adjacent to the first-shaped unit and that the inclined side thereof forms the outermost periphery of the ceramic block.
Further, the third-shaped units are disposed so that the first and second sides thereof are adjacent to the first-shaped unit and that the hypotenuse thereof forms the outermost periphery of the ceramic block.

Successively, forming sealing material layer is carried out in which a sealing material paste is applied to the peripheral face of the ceramic block, and the sealing material paste is dried and solidified to form a sealing material layer (coat layer). Thus, a round pillar-shaped honeycomb structured body is manufactured.
It is to be noted that the same paste as the adhesive paste can be used as the sealing material paste. Through the above-mentioned processes, a honeycomb structured body is manufactured.

The following will list the effects of the honeycomb structured body of the present embodiment.
(1) In the honeycomb structured body of the present embodiment, the inclined side of the second-shaped unit is disposed on the outermost periphery side, so that a ceramic block with a shape similar to a round pillar shape and the like can be manufactured.
Such a honeycomb structured body of the present embodiment is suitable for being manufactured without grinding. No raw materials are wasted in the manufacturing, and no time for grinding is required. Therefore, the problems attributed to grinding can be solved.

(2) In the honeycomb structured body of the present embodiment, the second side that forms the periphery of the second-shaped unit is 1.5 to 2.5 times longer than the longest side of the four sides that form the periphery of the first-shaped unit in the cross section perpendicular to the longitudinal direction.
Therefore, a ceramic block with a shape more similar to a round pillar shape and the like can be manufactured.

(3) In the honeycomb structured body of the present embodiment, since the third-shaped units are disposed, a ceramic block with a shape still more similar to a round pillar shape and the like can be manufactured.

### EXAMPLES

The following description will discuss examples that more specifically disclose the first embodiment of the present invention, and the present invention is not intended to be limited only by Example.

### (Example 1)

### (Manufacture of first-shaped unit)

Extrusion molding was carried out in which a wet mixture including silicon carbide as a main component was extrusion-molded to provide first-shaped raw honeycomb molded bodies with cells unsealed, having a shape almost the same as the shape illustrated in Fig. 2(a).

Subsequently, the raw honeycomb molded bodies were dried to obtain dried honeycomb molded bodies. Then, a paste with the same composition as the raw honeycomb molded bodies was injected into predetermined cells. The dried honeycomb molded bodies with the sealed cells were dried again with a drying apparatus.

Thereafter, degreasing and firing were carried out for the dried honeycomb molded bodies, thereby manufacturing honeycomb fired bodies comprising a silicon carbide sintered body with a size of 34.3 mm × 34.3 mm × 150 mm, i.e. the first-shaped units, which has a shape illustrated in Fig. 2(a).

### (Manufacture of second-shaped unit)

Second-shaped units with a shape illustrated in Fig. 3 were manufactured by the same processes as in the manufacture of the first-shaped units, except that the shape of the die used in the molding was changed.
The manufactured second-shaped units each have a first side with a 23.8 mm length, a second side with a 67. 6 mm length, and a third side with a 16.6 mm length, and an inclined side with a 61.7 mm length. Further, the length in the longitudinal direction of the second-shaped unit is the same as that of the first-shaped unit.

### (Manufacture of third-shaped unit)

Third-shaped units with a shape illustrated in Fig. 4 were manufactured by the same processes as in the manufacture of the first-shaped units, except that the shape of the die used in the molding was changed.
The manufactured third-shaped units each have a first side with a 34.3 mm length, a second side with a 34.3 mm length, and a hypotenuse with a 48.3 mm length. Further, the length in the longitudinal direction of the third-shaped unit is the same as that of the first-shaped unit.

### (Combining)

Successively, using a heat-resistant adhesive paste containing an alumina fiber and silicon carbide, a plurality of the honeycomb fired bodies were combined with one another by disposing the first-shaped units in the center part, and around them, the second-shaped units and the third-shaped units. Then, the adhesive paste was dried and solidified at 180°C to form an adhesive layer, and thereby a ceramic block that has a cross-sectional shape illustrated in Fig. 5 was manufactured.

### (Forming sealing material layer)

Subsequently, a sealing material paste with the same composition as the adhesive paste was applied to the peripheral face of the ceramic block. Then, the sealing material paste was dried and solidified at 120°C to form a sealing material layer to manufacture a round pillar-shaped honeycomb structured body.

The honeycomb structured body manufactured in the present example was manufactured without grinding, and therefore no raw materials were wasted upon manufacturing the honeycomb structured body.
The honeycomb structured body has a circular cross-sectional shape and a diameter of 266.7 mm (10.5 inches φ). The proportion of the area occupied by the units (the honeycomb fired bodies), i.e. the occupancy of the honeycomb fired bodies, in the cross-sectional area was 88%.

### (Second Embodiment)

The following description will discuss a second embodiment, which is one embodiment of the present invention, with reference to drawings.

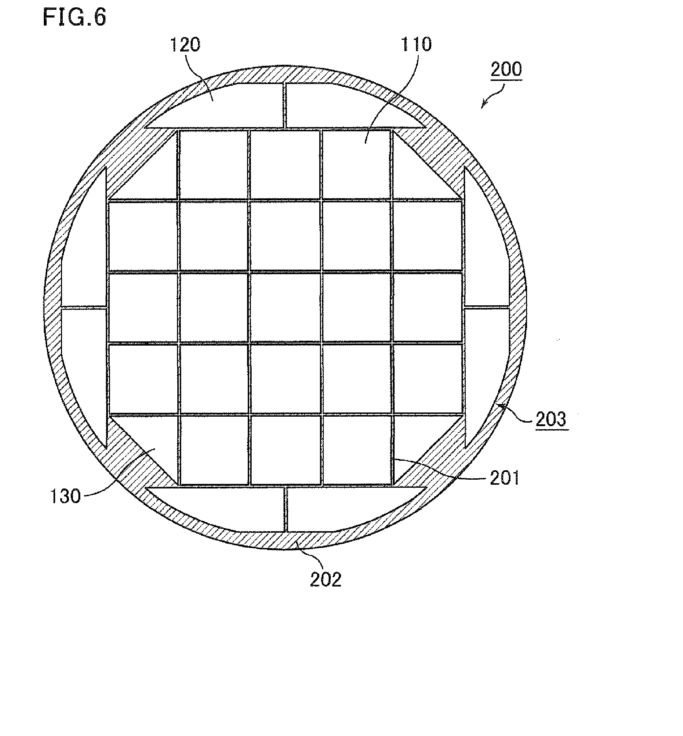

Fig. 6 is a side view schematically illustrating one example of a honeycomb structured body of the second embodiment of the present invention.
A honeycomb structured body 200 of the second embodiment of the present invention includes first-shaped units 110, second-shaped units 120, and third-shaped units 130, as in the honeycomb structured body 100 of the first embodiment of the present invention.
The honeycomb structured body 200 of the second embodiment of the present invention is the same as the honeycomb structured body 100 of the first embodiment, except for the number of the first-shaped units.

The total number of the honeycomb fired bodies in this honeycomb structured body 200 is 33 pieces. Of the total, 21 pieces are the first-shaped units, 8 pieces are the second-shaped units, and 4 pieces are the third-shaped units.
Thirty-three pieces of the honeycomb fired bodies are combined with one another with an adhesive layer 201 interposed therebetween to configure a ceramic block 203.
In addition, a sealing material layer 202 is formed on the peripheral face of the ceramic block 203, and thus, the cross section of the honeycomb structured body 200 perpendicular to the longitudinal direction has a circular shape.
Further, this circle has a diameter of 190 mm or more.

The manufacturing method of the honeycomb structured body of the second embodiment of the present invention is the same as that of the honeycomb structured body of the first embodiment of the present invention, and therefore, the detail description thereof is omitted.
The effects of the honeycomb structured body of the second embodiment of the present invention are the same as those of the honeycomb structured body of the first embodiment of the present invention.

### (Example 2)

First-shaped units, second-shaped units, and third-shaped units were prepared in the same manner as in example 1, and then, combining was carried out in the same manner as in example 1, and as a result, a ceramic block with a cross-sectional shape illustrated in Fig. 6 was prepared.
Successively, forming sealing material layer was carried out in the same manner as in example 1 to manufacture a round pillar-shaped honeycomb structured body.

The cross section of the honeycomb structured body manufactured in the present example has a circular shape and a diameter of 228.6 mm (9 inches φ).
The proportion of the area occupied by the units (the honeycomb fired bodies), i.e. the occupancy of the honeycomb fired bodies, in the cross-sectional area was 88%.

### (Third Embodiment)

The following description will discuss a third embodiment, which is one embodiment of the present invention, with reference to drawings.

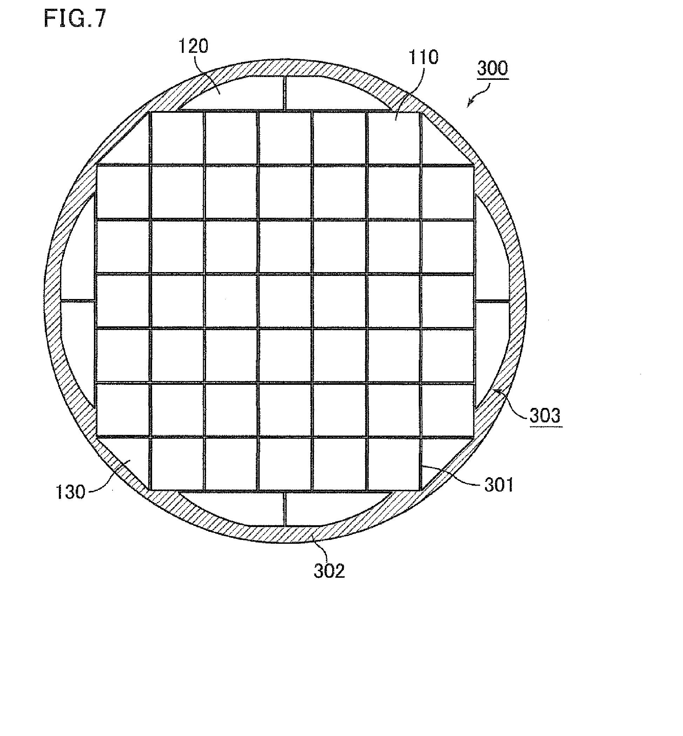

Fig. 7 is a side view schematically illustrating one example of a honeycomb structured body of the third embodiment of the present invention.
A honeycomb structured body 300 of the third embodiment of the present invention includes first-shaped units 110, second-shaped units 120, and third-shaped units 130, as in the honeycomb structured body 100 of the first embodiment of the present invention.
The honeycomb structured body 300 of the third embodiment of the present invention is the same as the honeycomb structured body 100 of the first embodiment, except for the number of the first-shaped units.

The total number of the honeycomb fired bodies in this honeycomb structured body 300 is 57 pieces. Of the total, 45 pieces are the first-shaped units, 8 pieces are the second-shaped units, and 4 pieces are the third-shaped units.
Fifty-seven pieces of honeycomb fired bodies are combined with one another with an adhesive layer 301 interposed therebetween to configure a ceramic block 303.
In addition, a sealing material layer 302 is formed on the peripheral face of the ceramic block 303, and thus, the cross section of the honeycomb structured body 300 perpendicular to the longitudinal direction has a circular shape.
further, this circle has a diameter of 190 mm or more.
The following will mention the size relationship between the first-shaped unit 110 and the second-shaped unit 120 in the first, second, and third embodiments of the present invention.
The first embodiment of the present invention (see Fig. 5) shows the following example: in the cross section perpendicular to the longitudinal direction of the honeycomb structured body, the length of the side equivalent to two pieces of the first-shaped units 110 is equal to the length of the longest straight side (the second side 125) of the second-shaped unit 120; and the position where the side equivalent to two pieces of the first-shaped units 110 is located is the same as the position where the longest straight side (the second side 125) is located.
The second embodiment of the present invention (see Fig. 6) shows the following example: in the cross section perpendicular to the longitudinal direction of the honeycomb structured body, the length of the side equivalent to two pieces of the first-shaped units 110 is equal to the length of the longest straight side of the second-shaped unit 120; the position where the side equivalent to two pieces of the first-shaped units 110 is located is different from the position where the longest straight side is located (specifically, different by the length of the side equivalent to half of the first-shaped unit 110); and the longest straight side of the second-shaped unit 120 is located to overlap with the position of the third-shaped unit 130.
The third embodiment of the present invention (see Fig. 7) shows the following example: in the cross section perpendicular to the longitudinal direction of the honeycomb structured body, the length of the side equivalent to two pieces of the first-shaped units 110 is equal to the length of the longest straight side of the second-shaped unit 120; the position where the side equivalent to two pieces of the first-shaped units 110 is located is different from the position where the longest straight side is located (specifically, different by the length of the side equivalent to half of the first-shaped unit 110) ; and one side of each of the first-shaped units 110 that are adjacent to the third-shaped unit 130 is adjacent to the longest straight side of the second-shaped unit 120 (the longest straight side of the second-shaped unit 120 is located not to overlap with the position of the third-shaped unit 130).

The manufacturing method of the honeycomb structured body of the third embodiment of the present invention is the same as that of the honeycomb structured body of the first embodiment of the present invention, and therefore, the detail description thereof is omitted.
The effects of the honeycomb structured body of the third embodiment of the present invention are the same as those of the honeycomb structured body of the first embodiment of the present invention.

### (Example 3)

First-shaped units, second-shaped units, and third-shaped units were prepared in the same manner as in example 1, and then, combining was carried out as in example 1, and as a result, a ceramic block with a cross-sectional shape illustrated in Fig. 7 was prepared.
Successively, forming sealing material layer was carried out as in example 1 to manufacture a round pillar-shaped honeycomb structured body.

The cross section of the honeycomb structured body manufactured in the present example has a circular shape and a diameter of 304.8 mm (12 inches φ) .
The proportion of the area occupied by the units (the honeycomb fired bodies), i.e. the occupancy of the honeycomb fired bodies, in the cross-sectional area was 88%.

### (Other Embodiments)

In respective embodiments, a unit with a fan-like cross section or a unit with a trapezoidal cross section may be employed as the second-shaped unit.

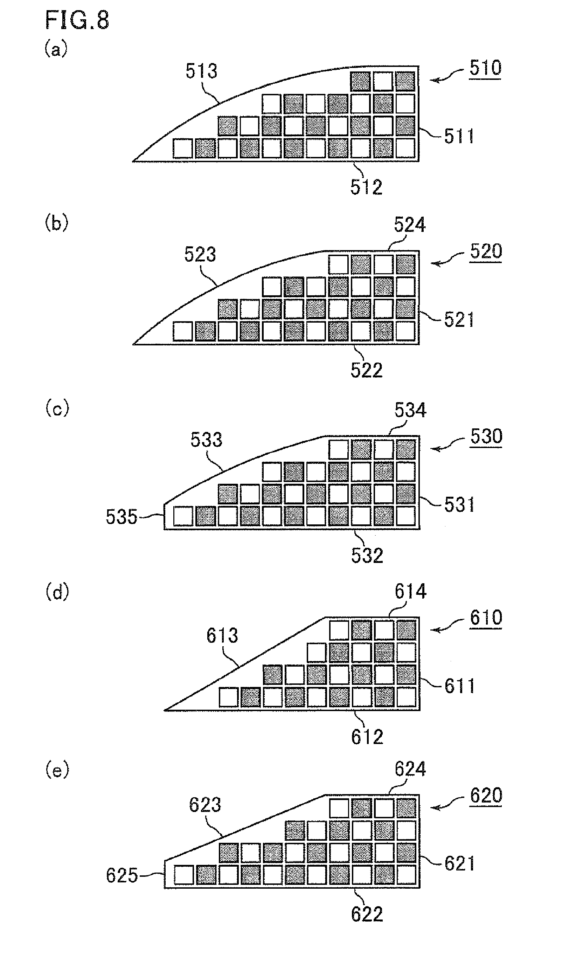

Fig. 8(a), Fig. 8(b), Fig. 8(c), Fig. 8(d) and Fig. 8(e) are side views each schematically illustrating one example of the second-shaped unit of the honeycomb structured body of the present invention.
Fig. 8(a), Fig. 8(b), and Fig. 8(c) each illustrate a unit with a fan-like cross section. Fig. 8(d) and Fig. 8(e) each illustrate a unit with a trapezoidal cross section.
The respective units with a fan-like cross section and the respective units with a trapezoidal cross section illustrated in the figures include cells that have a square shape in the cross section perpendicular to the longitudinal direction.

As the second-shaped unit, examples of the shape in the cross section perpendicular to the longitudinal direction include: a shape formed by one circular arc and two straight line portions; a shape formed by one circular arc and three straight line portions; a shape formed by one circular arc and four straight line portions, and the like. The number of the circular arc may be two or more, and the number of the straight line portions may be five or more, provided that the shape of the second-shaped unit in the cross section perpendicular to the longitudinal direction at least has one circular arc and two straight line portions.

Fig. 8(a) illustrates one example of a unit with a fan-like cross section, whose shape in the cross section perpendicular to the longitudinal direction is formed by one circular arc and two straight line portions. In a unit with a fan-like cross section 510 illustrated in Fig. 8(a), the shape in the cross section perpendicular to the longitudinal direction has a first side 511, a second side 512, and an inclined side 513.
The angle made by the first side 511 and the second side 512 is a right angle, and the inclined side 513 faces the right angle. The inclined side 513 is a circular arc.
The inclined side 513 is connected to the first side 511 and the second side 512.

Fig. 8(b) illustrates one example of a unit with a fan-like cross section, whose shape in the cross section perpendicular to the longitudinal direction is formed by one circular arc and three straight line portions. This unit with a fan-like cross section has the same shape as that of the second-shaped unit explained in the description of the honeycomb structured body of the first embodiment of the present invention.
In a unit with a fan-like cross section 520 illustrated in Fig. 8(b), the shape in the cross section perpendicular to the longitudinal direction has a first side 521, a second side 522, an inclined side 523, and a third side 524.
The angle made by the first side 521 and the second side 522 is a right angle, and the inclined side 523 faces the right angle. The inclined side 523 is a circular arc.
The third side 524 is a side that connects the inclined side 523 to the first side 521, and is parallel to the second side 522.

Fig. 8 (c) illustrates one example of a unit with a fan-like cross section, whose shape in the cross section perpendicular to the longitudinal direction is formed by one circular arc and four straight line portions. In a unit with a fan-like cross section 530 illustrated in Fig. 8(c), the shape in the cross section perpendicular to the longitudinal direction, has a first side 531, a second side 532, an inclined side 533, a third side 534, and a fourth side 535.
The angle made by the first side 531 and the second side 532 is a right angle, and the inclined side 533 faces the right angle. The inclined side 533 is a circular arc.
The third side 534 is a side that connects the inclined side 533 to the first side 531, and is parallel to the second side 532.
The fourth side 535 is a side that connects the inclined side 533 to the second side 532, and is parallel to the first side 531.

As the unit with a trapezoidal cross section, examples of the shape in the cross section perpendicular to the longitudinal direction include: a shape formed by four straight line portions; a shape formed by five straight line portions, and the like.
In the shape of the unit with a trapezoidal cross-section, the number of the inclined side may be two or more, and the number of the straight line portion may be six or more, provided that the straight line portions at least include one inclined side and two other sides (first and second sides). Here, the cross-sectional shape of the "unit with a trapezoidal cross section" is not limited to a trapezoidal shape, and may be a polygonal shape such as a pentagonal or hexagonal shape.

Fig. 8(d) illustrates one example of a unit with a trapezoidal cross section, whose shape in the cross section perpendicular to the longitudinal direction is formed by four straight line portions. In a unit with a trapezoidal cross section 610 illustrated in Fig. 8(d), the shape in the cross section perpendicular to the longitudinal direction has a first side 611, a second side 612, an inclined side 613, and a third side 614.
The angle made by the first side 611 and the second side 612 is a right angle, and the inclined side 613 faces the right angle. The inclined side 613 is a straight line.
The third side 614 is a side that connects the inclined side 613 to the first side 611, and is parallel to the second side 612.

Fig. 8(e) illustrates one example of a unit with a trapezoidal cross section, whose shape in the cross section perpendicular to the longitudinal direction is formed by five straight line portions. In a unit with a trapezoidal cross section 620 illustrated in Fig. 8(e), the shape in the cross section perpendicular to the longitudinal direction has a first side 621, a second side 622, an inclined side 623, a third side 624, and a fourth side 625.
The angle made by the first side 621 and the second side 622 is a right angle. The inclined side 623 faces the right angle. The inclined side 623 is a straight line.
The third side 624 is a side that connects the inclined side 623 to the first side 621, and is parallel to the second side 622.
The fourth side 625 is a side that connects the inclined side 623 to the second side 622, and is parallel to the first side 621.

Embodiments of the cells in the respective honeycomb fired bodies are not limited to those mentioned in the above-mentioned embodiments of the present invention.

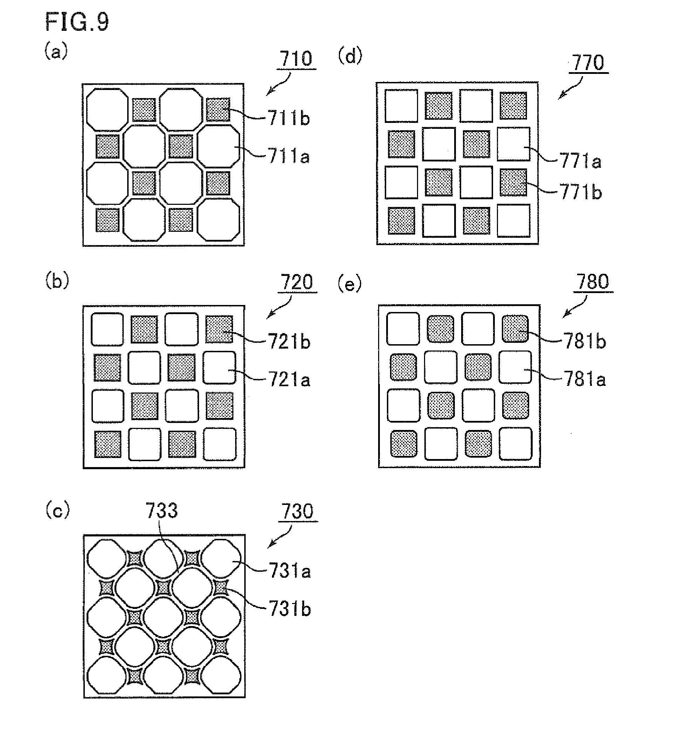

Fig. 9(a), Fig. 9(b), Fig. 9(c), Fig. 9(d), and Fig. 9(e) are side views each schematically illustrating one example of an end face of the first-shaped unit according to the honeycomb structured body of the present invention.
The honeycomb fired bodies illustrated in these figures each include large-capacity cells whose cross section perpendicular to the longitudinal direction has a relatively large area and small-capacity cells whose cross section perpendicular to the longitudinal direction has a relatively small area, the large-capacity cells and the small-capacity cells being alternately disposed.
Hereinafter, other embodiments of the cross-sectional shape of the cells of the honeycomb fired bodies are mentioned with reference to these figures.

In a honeycomb fired body 710 illustrated in Fig. 9(a), large-capacity cells 711a and small-capacity cells 711b are alternately disposed.
The cross section of the large-capacity cells 711a perpendicular to the longitudinal direction has an octagonal shape. The cross section of the small-capacity cells 711b perpendicular to the longitudinal direction has a quadrangular shape.
Here, the cross section of the small-capacity cells 711b perpendicular to the longitudinal direction may have a shape in which at least one portion equivalent to a corner of the quadrangle has a circular-arc shape.

The honeycomb fired body 720 illustrated in Fig. 9(b) includes large-capacity cells 721a and small-capacity cells 721b alternately disposed.
The cross section of the large-capacity cells 721a perpendicular to the longitudinal direction has a quadrangular shape in which portions equivalent to the corners have a circular-arc shape. The cross section of the small-capacity cells 721b perpendicular to the longitudinal direction has a quadrangular shape.

A honeycomb fired body 730 illustrated in Fig. 9(c) includes large-capacity cells 731a and small-capacity cells 731b alternately disposed.
The large-capacity cells 731a and the small-capacity cells 731b have a cross-section perpendicular to the longitudinal direction in which each side of the cells is formed by a curved line.
Specifically, in Fig. 9(c), the cross-sectional shape of a cell wall 733 is a curved shape.
In the shape of the cross section of the large-capacity cells 731a, the cell wall 733 is convex from the center to the outside of the cross section of the cell.
Whereas, in the shape of the cross section of the small-capacity cells 731b, the cell wall 733 is convex from the outside to the center of the cross section of the cell.
The cell wall 733 has a wave shape that rises and falls in the horizontal and vertical directions of the cross section of the honeycomb fired body. Mountain portions (portions that exhibits the maximum amplitude in the sine curve) of the wave shape of the adjacent cell walls 733 make their closest approach to one another, whereby large-capacity cells 731a whose cross section is dented outward and small-capacity cells 731b whose cross section is dented inward are formed. The amplitude of the wave shape may be constant or variable, but preferably is constant.

A honeycomb fired body 770 illustrated in Fig. 9(d) includes large-capacity cells 771a and small capacity cells 771b alternately disposed.
In the honeycomb fired body 770 illustrated in Fig. 9(d), the cross section each of the large-capacity cells 771a perpendicular to the longitudinal direction has a quadrangular shape, and the cross section of each of the small-capacity cells 771b perpendicular to the longitudinal direction has a quadrangular shape.

A honeycomb fired body 780 illustrated in Fig. 9(e) includes large-capacity cells 781a and small-capacity cells 781b alternately disposed.
In the honeycomb fired body 780 illustrated in Fig. 9(e), the cross section of the large-capacity cells 781a perpendicular to the longitudinal direction has a shape in which portions equivalent to corners of the quadrangle have a circular-arc shape, and the cross section of the small-capacity cells 781b perpendicular to the longitudinal direction has a shape in which portions equivalent to corners of the quadrangle have a circular-arc shape.
Here, the large-capacity cells and the small-capacity cells may have a shape other than the above-mentioned shapes.

When the honeycomb fired bodies include the large-capacity cells and the small-capacity cells, a distance between centers of gravity of adjacently located large-capacity cells in the cross section perpendicular to the longitudinal direction is desirably equal to a distance between centers of gravity of adjacently located small-capacity cells in the cross section perpendicular to the longitudinal direction.
The "distance between centers of gravity of adjacently located large-capacity cells in the cross section perpendicular to the longitudinal direction" means the minimum distance between a center of gravity of a large-capacity cell in the cross section perpendicular to the longitudinal direction and a center of gravity of an adjacent large-capacity cell in the cross section perpendicular to the longitudinal direction. On the other hand, the "distance between centers of gravity of adjacently located small-capacity cells in the cross section perpendicular to the longitudinal direction" means the minimum distance between a center of gravity of a small-capacity cell in the cross section perpendicular to the longitudinal direction and a center of gravity of an adjacent small-capacity cell in the cross section perpendicular to the longitudinal direction.

When the two distances between centers of gravity are equal to each other, heat diffuses homogeneously upon regeneration of a honeycomb structured body, whereby a local dispersion of temperature disappears in the honeycomb structured body. Hence, such a honeycomb structural body being excellent in durability, i.e. where no cracks and the like appear due to a thermal stress even if it is repeatedly used for a long period of time, is obtained.

The case where the cells in the honeycomb fired body are composed of the large-capacity cells and the small-capacity cells is mentioned above with the first-shaped unit taken as an example, but the second- or third-shaped units may include a large-capacity cell and a small-capacity cell.

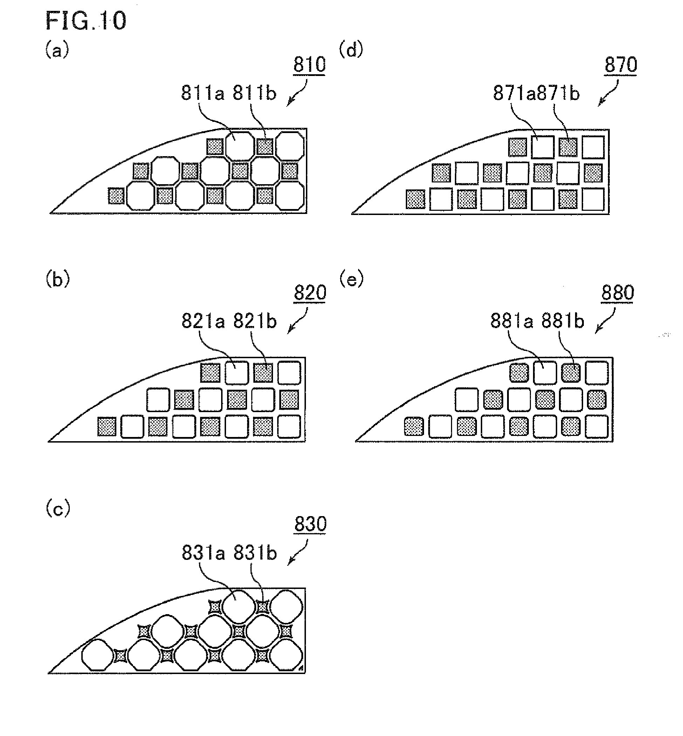

Fig. 10(a), Fig. 10(b), Fig. 10(c), Fig. 10(d), and Fig. 10(e) are side views each schematically illustrating one example of an end face of the second-shaped unit in accordance with the honeycomb structured body of the present invention.
Second-shaped units 810, 820, 830, 870, and 880 illustrated in these figures include large-capacity cells 811a, 821a, 831a, 871a, and 881a, and small-capacity cells 811b, 821b, 831b, 871b, and 881b, respectively. The respective large-capacity cells 811a, 821a, 831a, 871a, and 881a, and the respective small-capacity cells 811b, 821b, 831b, 871b, and 881b, are alternately disposed.
The shapes of the large-capacity cells and the small-capacity cells are the same as in the first-shaped unit, and therefore the detail description thereof is omitted.

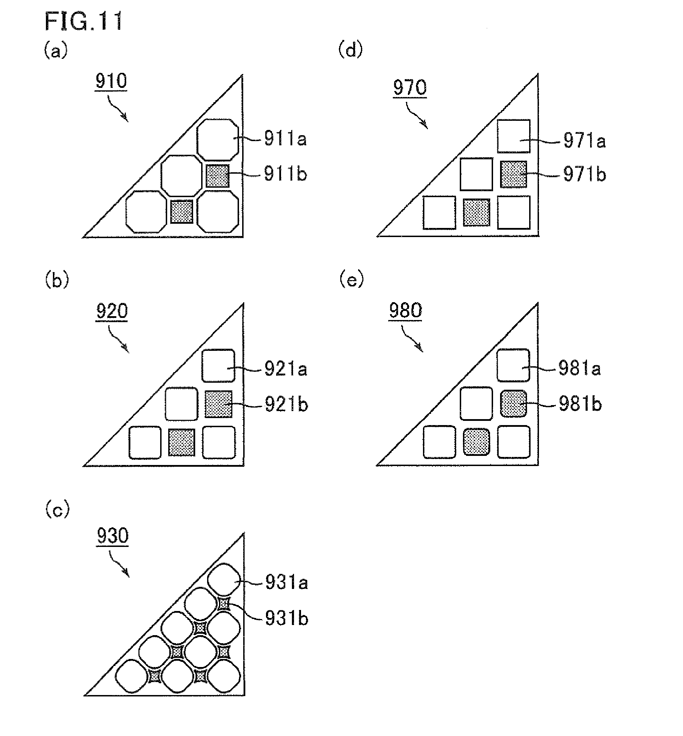

Fig. 11(a), Fig. 11(b), Fig. 11(c), Fig. 11(d), and Fig. 11(e) are side views each schematically illustrating one example of an end face of the third-shaped unit in accordance with the honeycomb structured body of the present invention.
Third-shaped units 910, 920, 930, 970, and 980 illustrated in these figures include large-capacity cells 911a, 921a, 931a, 971a, and 981a, and small-capacity cells 911b, 921b, 931b, 971b, and 981b, respectively. The respective large-capacity cells 911a, 921a, 931a, 971a, and 981a, and the respective small-capacity cells 911b, 921b, 931b, 971b, and 981b, are alternately disposed.
The shapes of the large-capacity cells and the small-capacity cells are the same as in the first-shaped unit mentioned above, and therefore the detail description thereof is omitted.

The honeycomb structured body of the present invention does not necessarily include the third-shaped unit whose cross section perpendicular to the longitudinal direction has a substantially triangular shape.

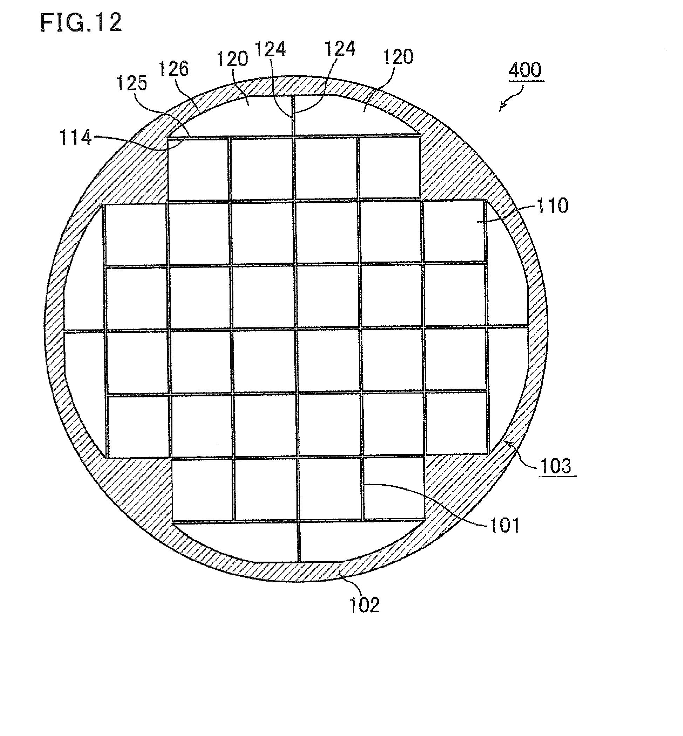

Fig. 12 is a side view schematically illustrating one example of the honeycomb structured body in accordance with an embodiment of the present invention.
A honeycomb structured body 400 illustrated in Fig. 12 has a shape formed by removing the third-shaped units 130 from the honeycomb structured body 100 illustrated in Fig. 5.
The honeycomb structured body 400 with such a shape is also included in the honeycomb structured body of the present invention, but the honeycomb structured body including the third-shaped units is better in view of increase in effective filtration area of the honeycomb structured body.

The shape of the honeycomb structured body is not especially limited to a round pillar shape, and may have any desired pillar shape such as a cylindroid shape, a pillar shape with a racetrack end face, a substantially triangular shape, and a polygonal pillar shape.

The porosity of the honeycomb fired body is not particularly limited, and is desirably 35 to 60%.
When the honeycomb structured body that is configured by the honeycomb fired bodies is used as a filter, a porosity of the honeycomb fired body of less than 35% easily causes clogging in the honeycomb fired body, while a porosity of the honeycomb fired body of more than 60% tends to cause a decrease in strength of the honeycomb fired body with the result that the honeycomb fired body is easily broken.

The average pore diameter of the honeycomb fired body is desirably 5 to 30 µm.
When the honeycomb structured body that is configured by the honeycomb fired bodies is used as a filter, an average pore diameter of the honeycomb fired body of less than 5 µm easily causes clogging of particulates. On the other hand, the honeycomb fired body with an average pore diameter of more than 30 µm allows particulates to pass through the pores, and as a result, it can not sufficiently function as a filter.

Here, the above-mentioned porosity and pore diameter can be measured through known methods such as a measuring method using a mercury porosimeter.

The cell wall thickness of the honeycomb fired body is not particularly limited, and desirably is 0.2 to 0.4 mm.
If the thickness of the cell wall is less than 0.2 mm, the cell wall is so thin that it can not maintain the strength of the honeycomb fired body; whereas a thickness of the cell wall exceeding 0.4 mm increases pressure loss of the honeycomb structured body.

The cell density in the cross section perpendicular to the longitudinal direction of the honeycomb fired body is not particularly limited. A desirable lower limit is 31 pcs/cm² (200 pcs/in²) and a desirable upper limit is 93 pcs/cm² (600 pcs/in²). A more desirable lower limit is 38.8 pcs/cm² (250 pcs/in²) and a more desirable upper limit is 77.5 pcs/cm² (500 pcs/in²) .
The proportion of the area occupied by the units (the honeycomb fired bodies) in the cross section perpendicular to the longitudinal direction of the honeycomb structured body, i.e. the occupancy of the honeycomb fired bodies , is desirably 85% or higher, and more desirably 88% or higher. As the occupancy of the honeycomb fired bodies in the honeycomb structure body becomes higher, the filtration area increases, and thus, the purifying performance for exhaust gases is enhanced.

The main component of the constitution material of the honeycomb fired body is not limited to silicon carbide, and may be the following ceramics: nitride ceramics such as aluminum nitride, silicon nitride, boron nitride, and titanium nitride; carbide ceramics such as zirconium carbide, titanium carbide, tantalum carbide, and tungsten carbide; oxide ceramics such as alumina, zirconia, cordierite, mulite, aluminum titanate; and the like.
Among these components, non-oxide ceramics are preferable, and silicon carbide is particularly preferable. This is because they are excellent in thermal resistance, mechanical strength, thermal conductivity and the like. Moreover, silicon-containing silicon carbide in which silicon carbide is blended with metallic silicon is preferably used for the same reason.

A catalyst may be supported on the honeycomb structured body of the present invention.
When a catalyst capable of converting harmful gaseous components such as CO, HC, and NOx in an exhaust gas is supported on the honeycomb structured body, the harmful gaseous components in the exhaust gas can be converted sufficiently by catalytic reaction. Moreover, when a catalyst for assisting combustion of PMs is supported on the honeycomb structured body, the PMs can be more easily burned and removed.

The honeycomb structured body (honeycomb filter) with cells sealed at either one end thereof is mentioned as the honeycomb structured body; however, in the honeycomb structured body of the present invention, the cells are not necessarily sealed at an end thereof. This honeycomb structured body of the present invention can be suitably used as a catalyst supporting carrier.

In the method for manufacturing the honeycomb structured body of the present invention, the method for preparing the ceramic block by disposing the honeycomb fired bodies at predetermined positions is not especially limited. The following method can be employed, for example.

Firstly, a plurality of honeycomb fired bodies are placed in parallel with one another in columns and rows, with a spacer interposed therebetween, thereby preparing a parallel-arranged body of the honeycomb fired bodies whose cross section perpendicular to the longitudinal direction thereof has a shape almost the same as that of a ceramic block to be manufactured.
In this case, a gap corresponding to the thickness of the spacer is formed between the honeycomb fired bodies.

Successively, the parallel-arranged body of the honeycomb fired bodies is placed inside a filling apparatus including a tubiform with a cylindrical shape and the like, and the gap formed between the honeycomb fired bodies and the gap formed between the parallel-arranged body and the tubiform are filled with a sealing material paste.

The filling apparatus is provided with the tubiform having a cylindrical shape and the like and a sealing material paste supply device. The tubiform has an inner diameter slightly larger than the diameter of the parallel-arranged body of the honeycomb fired bodies to be disposed thereinside, and is so configured that a gap is formed between the tubiform and the parallel-arranged body of the honeycomb fired bodies when the parallel-arranged body is disposed in the inner space of the tubiform.

The sealing material paste supply device is so configured to allow simultaneously filling a space between the honeycomb fired bodies and a space between the tubiform and the parallel-arranged body with a sealing material paste accommodated in a sealing material paste container.

With the parallel-arranged body of the honeycomb fired bodies and the filling apparatus, the sealing material paste is filled into the space between the honeycomb fired bodies and the space between the tubiform and the parallel-arranged body. Successively, the sealing material paste is dried and solidified to simultaneously form an adhesive layer between the honeycomb fired bodies and a sealing material layer (coat layer).

Specifically, the above-mentioned method is a method including simultaneously carrying out combining in which a ceramic block is prepared and forming sealing material layer in which a sealing material layer is formed on the peripheral face of the ceramic block.

Further, in the method for manufacturing the honeycomb structured body of the present invention, for example, the following method may be employed as the method for preparing a ceramic block by disposing the honeycomb fired bodies at predetermined positions.
The following description will discuss a method for preparing a ceramic block by exemplifying the case of preparing the ceramic block illustrated in Fig. 5.
Firstly, an adhesive paste is applied to the side surface of the first-shaped unit 110 to form an adhesive paste layer. Then, another first-shaped unit 110 is piled up on this adhesive paste layer and this operation is repeated.

Next, an adhesive paste is applied to a portion free of the second-shaped unit 120 in the periphery of the first-shaped units 110 in Fig. 5, thereby forming an adhesive paste layer.
Then, the third-shaped units 130 are each fitted into the periphery of the first-shaped units 110 so that the first side 134 and the second side 135 of the third-shaped unit 130 are adjacent to the first-shaped units 110, respectively, with the adhesive paste layer therebetween.

Successively, an adhesive paste is applied to a portion free of the third-shaped unit 130 in the periphery of the first-shaped units 110 in Fig. 5, thereby forming an adhesive paste layer.
Then, the second-shaped units 120 are each fitted into the periphery of the first-shaped units 110 so that the second side 125 of the second-shaped unit is adjacent to the first-shaped unit 110 and that the first sides 124 of two second-shaped units 120 are adjacent to each other.
In this case, an adhesive paste is applied also to the first sides of the adjacent two second-shaped units 120, thereby forming an adhesive paste layer.

Thus, a ceramic block with a cross-sectional shape illustrated in Fig. 5 is manufactured in which 32 pieces of the first-shaped units 110, 8 pieces of the second-shaped units 120, and 4 pieces of the third-shaped units 130 are combined with one another with the adhesive paste layer interposed therebetween.

Successively, forming sealing material layer is carried out in which a sealing material paste is applied to the peripheral face of the ceramic block, and then dried and solidified to form a sealing material layer (coat layer) to manufacture a round pillar-shaped honeycomb structured body.

Specifically, the above-mentioned method is a method including independently carrying out combining in which a ceramic block is prepared and forming sealing material layer in which a sealing material layer is formed on the peripheral face of the ceramic block.

### EXPLANATION OF SYMBOLS

100, 200, 300, 400 Honeycomb structured body
101, 201, 301 Adhesive layer
102, 202, 302 Sealing material layer
103, 203, 303 Ceramic block
110, 710, 720, 730, 770, 780 First-shaped unit (honeycomb fired body)
111, 121, 131 Cell
113, 123, 133, 733 Cell wall
114 Side (side of first-shaped unit)
120, 510, 520, 530, 610, 620, 810, 820, 830, 870, 880 Second-shaped unit (honeycomb fired body)
123a Outer wall
124, 511, 521, 531, 611, 621 First side
125, 512, 522, 532, 612, 622 Second side
126, 513, 523, 533, 613, 623 Inclined side
130, 910, 920, 930, 970, 980 Third-shaped unit (honeycomb fired body)
711a, 721a, 731a, 771a, 781a, 811a, 821a, 831a, 871a, 881a, 911a,
921a, 931a, 971a, 981a Large-capacity cell
711b, 721b, 731b, 771b, 781b, 811b, 821b, 831b, 871b, 881b, 911b,
921b, 931b, 971b, 981b Small-capacity cell

## Claims

1. A honeycomb structured body, comprising:
a ceramic block formed by a plurality of honeycomb fired bodies combined with one another with an adhesive layer interposed therebetween, each of said honeycomb fired bodies having a large number of cells placed in parallel with one another in a longitudinal direction with a cell wall therebetween; and
a sealing material layer formed on a peripheral face of said ceramic block,
wherein
said honeycomb fired bodies comprise a first-shaped unit and a second-shaped unit,
said first-shaped unit has a quadrangular shape in the cross-section perpendicular to the longitudinal direction,
said second-shaped unit has a shape that includes at least a first side, a second side making a right angle with said first side, and an inclined side facing said right angle in the cross section perpendicular to the longitudinal direction,
an outer wall is formed in a peripheral portion of said second-shaped unit,
said second-shaped unit is located in a peripheral portion of said ceramic block and is disposed with said second side being adjacent to said first-shaped unit,
said honeycomb structured body has, in the cross-section perpendicular to the longitudinal direction, a shape in which the second side forming the periphery of said second-shaped unit is longer than the longest side of the four sides forming the periphery of said first-shaped unit in the cross section perpendicular to the longitudinal direction.

2. The honeycomb structured body according to claim 1,
wherein
the second side forming the periphery of said second-shaped unit is 1.5 to 2.5 times longer than the longest side of the four sides forming the periphery of said first-shaped unit in the cross section perpendicular to the longitudinal direction.

3. The honeycomb structured body according to claim 1 or 2,
wherein
said honeycomb fired bodies further comprise a third-shaped unit,
said third-shaped unit has a substantially triangular shape in the cross-section perpendicular to the longitudinal direction, and
said third-shaped unit is located in the peripheral portion of said ceramic block.

4. The honeycomb structured body according to any one of claims 1 to 3,
wherein
the number of said honeycomb fired bodies is 25 or more.

5. The honeycomb structured body according to any one of claims 1 to 4,
wherein
said honeycomb structured body has a circular shape in the cross-section perpendicular to said longitudinal direction and has a diameter of 190 mm or more.

6. The honeycomb structured body according to any one of claims 1 to 5,
wherein
said large number of cells have a quadrangular shape in the cross-section perpendicular to said longitudinal direction.

7. The honeycomb structured body according to any one of claims 1 to 6,
wherein
said large number of cells comprise a large-capacity cell and a small-capacity cell.

8. The honeycomb structured body according to claim 7,
wherein
said large-capacity cell and said small-capacity cell have, in the cross-section perpendicular to said longitudinal direction, a quadrangular shape or a quadrangular shape in which at least one portion equivalent to a corner of the quadrangle has a circular-arc shape.

9. The honeycomb structured body according to claim 7,
wherein
said large-capacity cell has an octagonal shape in the cross-section perpendicular to said longitudinal direction, and
said small-capacity cell has, in the cross-section perpendicular to said longitudinal direction, a quadrangular shape or a quadrangular shape in which at least one portion equivalent to a corner of the quadrangle has a circular-arc shape.

10. The honeycomb structured body according to claim 7,
wherein
said large-capacity cell and said small-capacity cell have a cross-section perpendicular to the longitudinal direction in which each side of the cells is formed by a curved line.

11. The honeycomb structured body according to any one of claims 1 to 10,
wherein
said large number of cells are sealed at either one end thereof.

12. The honeycomb structured body according to any one of claims 1 to 11,
wherein
said honeycomb structured body has a shape of a circle, a racetrack, an ellipse, or a substantially triangle in the cross-section perpendicular to said longitudinal direction.

13. The honeycomb structured body according to any one of claims 1 to 12,
wherein
said ceramic block has a shape of a circle, a racetrack, an ellipse, or a polygon similar to a substantially triangle in the cross-section perpendicular to said longitudinal direction.
